# FASCICULE DE BREVET EUROPEEN

(11) **EP 0 734 904 B1**
(45) Date de publication et mention de la délivrance du brevet: **23.02.2000**
(21) Numéro de dépôt: 96400684.5
(22) Date de dépôt: 29.03.1996
(51) Int. Cl.: B60R 13/04

(54) **Joint d'étanchéité et son procédé de fabrication**
Dichtung und ihr Herstellungsverfahren
Seal and its manufacturing method

(30) Priorité: 29.03.1995 FR 9503682
(43) Date de publication de la demande: 02.10.1996
(73) Titulaire: STANDARD PRODUCTS INDUSTRIEL, F-95871 Bezons (FR)
(72) Inventeur: Sergent, Jean-Rémy, 78500 Sartrouville (FR)
(74) Mandataire: Busnel, Jean-Benoît

(56) Documents cités:
- EP-A- 0 372 745
- EP-A- 0 419 072
- FR-A- 2 650 233
- GB-A- 2 093 407

## Description

La présente invention concerne un joint d'étanchéité ainsi que son procédé de fabrication.

L'invention concerne plus particulièrement les joints d'étanchéité destinés à être montés sur une feuillure de carrosserie de véhicule automobile.

Il existe plusieurs modes de réalisation de joints de ce type comprenant, d'une part, un élément de fixation de section sensiblement en U, pourvu d'une armature interne et, d'autre part, au moins un élément d'étanchéité.

L'armature interne est généralement constituée d'une bande métallique qui comporte des zones ajourées obtenues par découpe ou fentage.

Ces zones ajourées sont orientées transversalement sur la bande de façon à lui conférer une certaine souplesse longitudinale.

L'armature est destinée à être noyée dans la matière (élastomère ou plastomère) constitutive du joint lors des opérations de fabrication par extrusion.

Cependant, à la sortie de la filière d'extrusion de tels joints présentent des défauts d'aspect (ondulations, cavités...) au niveau des zones ajourées de l'armature.

Le EP-A- 0 419 072 divulgue un procédé de fabrication de joint d'étanchéité du type comprenant, notamment l'extrusion d'un élément de fixation pourvu d'une armature interne et d'au moins un élément d'étanchéité, dans lequel on réalise par extrusion simultanée du côté apparent du joint, un élément de masquage flottant rattaché par une extrémité à l'élément de fixation et on effectue successivement des opérations de rabattage mécanique puis de fixation à plat dudit élément des masquage sur l'élément de fixation de façon à occulter, sur les faces apparentes, les défauts d'aspect.

Le EP-A- 0 372 745 divulgue, quant à lui, la réalisation de joints d'étanchéité dont l'élément de fixation a une section sensiblement en forme de U avec une armature interne.

Cependant, les joints décrits dans ces documents, ne possèdent aucun espace mort entre l'élément de masquage et la face externe de la branche en regard de l'élément de fixation.

Il en résulte que les défauts d'aspect engendrés par les zones ajourées de l'armature sont susceptibles de s'imprimer sur le tronçon apparent de l'élément de masquage lors de son collage sur la branche de l'élément de fixation.

En outre, ces joints ne permettent pas d'assurer un positionnement précis de l'extrémité de l'élément de masquage sur la branche en regard de l'élément de fixation ni de compenser les éventuelles imprécisions dimensionnelles résultant de la fabrication ou du montage.

La présente invention a pour but de résoudre ces problèmes techniques de manière satisfaisante.

Ce but est atteint au moyen d'un joint d'étanchéité comprenant, d'une part, un élément de fixation de section sensiblement en U, pourvu d'une armature interne avec des zones ajourées et, d'autre part, au moins un élément d'étanchéité pourvu d'un élément de masquage flottant, rattaché par une extrémité à l'élément de fixation, et destiné à être plaqué et fixé sur la branche apparente de ce dernier pour occulter les défauts d'aspect crées par les zones ajourées de l'armature interne, caractérisé en ce que la branche de l'élément de fixation en U destinée à recevoir l'élément de masquage est pourvue de reliefs longitudinaux formant des entretoises de liaison avec ledit élément de masquage.

Selon un mode de réalisation avantageux, ledit élément de masquage est constitué d'un flasque souple comprenant un premier tronçon de raccordement avec l'élément de fixation en U qui se prolonge via un coude par un second tronçon de recouvrement de la branche apparente de l'élément de fixation.

De préférence, l'extrémité de raccordement du premier tronçon de l'élément de masquage avec l'élément de fixation en U est solidaire de la branche opposée à la branche apparente.

Selon une caractéristique avantageuse, ledit élément d'étanchéité est solidaire de l'élément de masquage.

Selon encore une autre caractéristique, l'extrémité libre de l'élément de masquage comporte un rebord coudé destiné à épouser l'extrémité de la branche apparente de l'élément de fixation après placage.

Un autre objet de l'invention est un procédé de fabrication d'un joint d'étanchéité comprenant notamment l'extrusion d'un élément de fixation de section sensiblement en U pourvu d'une armature interne avec des zones ajourées et d'au moins un élément d'étanchéité, réalisé par co-extrusion avec du côté apparent du joint, un élément de masquage flottant, rattaché par une extrémité à l'élément de fixation et à plat sur l'élément de fixation de façon à occulter sur les faces apparentes les défauts d'aspects crées par les zones ajourées de l'armature interne, caractérisé en ce qu'on réalise par extrusion simultanée sur la face apparente de l'élément de fixation destinée à recevoir l'élément de masquage des reliefs longitudinaux formant des entretoises de liaison avec ledit élément de masquage.

Selon une caractéristique avantageuse du procédé, on rattache ledit élément de masquage à l'élément de fixation dans une zone où l'armature interne n'est pas ajourée.

Selon une autre caractéristique, on réalise la fixation de l'élément de masquage sur l'élément de fixation par thermocollage.

L'invention permet de masquer les défauts d'aspect crées sur les faces apparentes de l'élément de fixation avec un moyen simple et économique.

L'outillage permettant le placage et la fixation à plat de l'élément de masquage est facile à mettre en oeuvre et peut, en outre, donner à sa face externe apparente un profil varié.

De plus, dans les courbes de la feuillure de support, l'invention permet de masquer les défauts d'aspect provenant à la fois de l'armature et du cintrage du joint.

L'invention trouve principalement son application dans l'industrie automobile sous forme de coulisse de vitre mobile, de lécheur de vitre, de joint d'ouvrant (porte, coffre) etc...

L'invention sera mieux comprise à la lecture de la description qui va suivre, accompagnée des dessins sur lesquels :
- la figure 1 représente une vue en perspective avec coupe transversale d'un joint selon l'invention avant placage de l'élément de masquage ; et
- la figure 2 représente une vue en perspective avec coupe transversale du joint de la figure 1 après placage et fixation de l'élément de masquage.

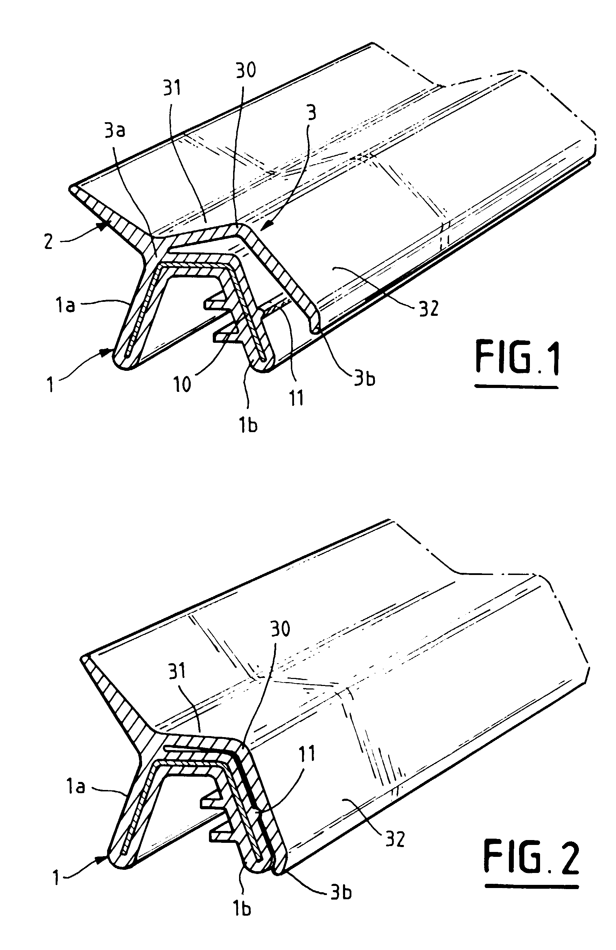

Le joint représenté sur les figures 1 et 2 comprend d'une part un élément de fixation 1 dont la section transversale est sensiblement en U et d'autre part, au moins un élément d'étanchéité 2.

L'élément de fixation 1 comporte une armature interne 10 avec des zones ajourées formant, lors de l'extrusion, des défauts d'aspect qui sont particulièrement préjudiciables à l'aspect esthétique des faces apparentes.

Pour remédier à ce problème, le joint est pourvu d'un élément de masquage 3, flottant et rattaché par une extrémité 3a à l'élément de fixation 1 (figure 1).

L'élément de masquage 3 est destiné à être plaqué et fixé à plat sur la branche apparente 1b de l'élément de fixation 1 en U pour occulter les défauts d'aspects présents sur cette branche (figure 2).

L'élément de masquage 3 est constitué d'un flasque souple comprenant un premier tronçon 31 assurant le raccordement avec l'élément de fixation 1 et, plus précisément, dont l'extrémité 3a est solidaire de la branche la opposée à la branche apparente 1b.

De préférence, le raccordement du premier tronçon 31 est situé dans une zone de l'élément de fixation 1 où l'armature interne 10 n'est pas ajourée pour ne pas fragiliser la liaison.

Le premier tronçon 31 se prolonge, via un coude 30 par un second tronçon 32 assurant le recouvrement de la branche apparente 1b de l'élément de fixation 1 en U.

Dans le mode de réalisation des figures 1 et 2 l'élément d'étanchéité 2 est sous forme d'une lèvre souple solidaire du premier tronçon 31 de l'élément de masquage 3.

La face externe de la branche 1b de l'élément de fixation 1 en U est pourvue de reliefs longitudinaux 11 formant des entretoises de liaison avec l'élément de masquage 3.

Les reliefs 11 sont réalisés par extrusion simultanée sous forme de nervures continues ou de picots plus ou moins espacés les uns des autres dont les dimensions sont déterminées en fonction des épaisseurs relatives de la branche 1b et de l'élément de masquage 3.

L'extrémité libre 3b de l'élément de masquage 3 comporte un rebord coudé destiné à épouser l'extrémité de la branche apparente 1b de l'élément de fixation 1 après placage.

Dans un mode de réalisation non représenté, le rebord coudé de l'extrémité 3b vient se verrouiller par encliquetage sur l'extrémité de la branche 1b en assurant une tension du flasque souple de l'élément de masquage.

Le joint de l'invention est fabriqué en effectuant d'abord une extrusion conjointe, à partir d'une matière élastomère ou plastomère, des éléments de fixation 1, d'étanchéité 2, et de masquage 3 en enrobant l'armature 10.

A la sortie de la filière d'extrusion les défauts d'aspect apparaissant sur la branche 1b sont occultés en effectuant un rabattage mécanique de l'élément de masquage 3 par exemple au moyen de rouleaux presseurs puis en réalisant la fixation à plat dudit élément 3 par exemple par thermocollage sur les reliefs 11.

## Revendications

1. Procédé de fabrication d'un joint d'étanchéité comprenant notamment l'extrusion d'un élément de fixation (1) de section sensiblement en U pourvu d'une armature interne (10) avec des zones ajourées et d'au moins un élément d'étanchéité (2), réalisé par co-extrusion avec, du côté apparent du joint, un élément de masquage flottant (3), rattaché par une extrémité (3a) à l'élément de fixation (1) et fixé à plat sur l'élément de fixation (1) de façon à occulter sur les faces apparentes les défauts d'aspect créés par les zones ajourées de l'armature interne (10),
caractérisé en ce qu'on réalise par extrusion simultanée sur la face apparente de l'élément de fixation destinée à recevoir l'élément de masquage (3) des reliefs longitudinaux (11) formant des entretoises de liaison avec ledit élément de masquage.

2. Procédé selon la revendication 1, caractérisé en ce qu'on rattache ledit élément de masquage (3) à l'élément de fixation (1) dans une zone où l'armature interne (10) n'est pas ajourée.

3. Procédé selon l'une des revendications précédentes, caractérisé en ce qu'on réalise la fixation de l'élément de masquage (3) sur l'élément de fixation (1) par thermocollage.

4. Joint d'étanchéité comprenant d'une part, un élément de fixation (1) de section sensiblement en U, pourvu d'une armature interne (10) avec des zones ajourées et, d'autre part, au moins un élément d'étanchéité (2), pourvu d'un élément de masquage flottant (3), rattaché par une extrémité (3a) à l'élément de fixation (1), et destiné à être plaqué et fixé sur la branche apparente (1b) de ce dernier pour occulter les défauts d'aspect créés par les zones ajourées de l'armature interne (10),
caractérisé en ce que la branche (1b) de l'élément de fixation (1) en U destinée à recevoir l'élément de masquage (3) est pourvue de reliefs longitudinaux (11) formant des entretoises de liaison avec ledit élément de masquage (3).

5. Joint selon la revendication 4, caractérisé en ce que ledit élément de masquage (3) est constitué d'un flasque souple comprenant un premier tronçon (31) de raccordement avec l'élément de fixation (1) en U qui se prolonge via un coude (30) par un second tronçon (32) de recouvrement de la branche apparente (1b) de l'élément de fixation (1).

6. Joint selon la revendication 5, caractérisé en ce que l'extrémité de raccordement (3a) du premier tronçon (31) de l'élément de masquage (3) avec l'élément de fixation (1) en U est solidaire de la branche opposée (1a) à la branche apparente (1b).

7. Joint selon l'une des revendications 4 à 6, caractérisé en ce que ledit élément d'étanchéité (2) est solidaire de l'élément de masquage (3).

8. Joint selon l'une des revendications 4 à 7, caractérisé en ce que l'extrémité libre (3b) de l'élément de masquage (3) comporte un rebord coudé destiné à épouser l'extrémité de la branche apparente (1b) de l'élément de fixation (1) après placage.

## Patentansprüche

1. Verfahren zur Herstellung einer Dichtung, das insbesondere die Extrusion eines Befestigungselements (1) mit im wesentlichen U-förmigem Querschnitt enthält, welches mit einer inneren Bewehrung (10) mit durchbrochenen Bereichen und mit zumindest einem Dichtelement (2) versehen ist, das durch Koextrusion mit einem freitragenden Deckelement (3) auf der sichtbaren Seite der Dichtung hergestellt ist, welches Deckelement mit einem Ende (3a) an das Befestigungselement (1) angesetzt ist und flachliegend am Befestigungselement (1) so befestigt ist, daß durch die durchbrochenen Bereiche der inneren Bewehrung (10) hervorgerufene Schönheitsfehler auf den sichtbaren Seiten verdeckt werden,
dadurch gekennzeichnet, daß durch gleichzeitige Extrusion auf der zur Aufnahme des Deckelements (3) bestimmten sichtbaren Seite des Befestigungselements Längserhebungen (11) ausgebildet werden, die Stege zur Verbindung mit dem genannten Deckelement bilden.

2. Verfahren nach Anspruch 1, dadurch gekennzeichnet, daß das genannte Deckelement (3) in einem Bereich an das Befestigungselement (1) angesetzt wird, in dem die innere Bewehrung (10) nicht durchbrochen ist.

3. Verfahren nach einem der vorhergehenden Ansprüche, dadurch gekennzeichnet, daß die Befestigung des Deckelements (3) am Befestigungselement (1) durch Heißverklebung erfolgt.

4. Dichtung, die einerseits ein Befestigungselement (1) mit im wesentlichen U-förmigem Querschnitt enthält, das mit einer inneren Bewehrung (10) mit durchbrochenen Bereichen versehen ist, und die andererseits zumindest ein Dichtelement (2) enthält, das mit einem freitragenden Deckelement (3) versehen ist, welches mit einem Ende (3a) an aas Befestigungselement (1) angesetzt und dazu bestimmt ist, auf den sichtbaren Schenkel (1b) des letztgenannten aufgesetzt und befestigt zu werden, um durch die durchbrochenen Bereiche der inneren Bewehrung (10) hervorgerufene Schönheitsfehler zu verdecken,
dadurch gekennzeichnet, daß der Schenkel (1b) des U-förmigen Befestigungselements (1), der dazu bestimmt ist, das Deckelement (3) aufzunehmen, mit Längserhebungen (11) versehen ist, die Stege zur Verbindung mit dem genannten Deckelement (3) bilden.

5. Dichtung nach Anspruch 4, dadurch gekennzeichnet, daß das Deckelement (3) aus einem nachgiebigen Flansch besteht, der einen ersten Abschnitt (31) zum Anschluß an das U-förmige Deckelement enthält, welcher sich mittels einer Biegung (30) in einem zweiten Abschnitt (32) zum Abdecken des sichtbaren Schenkels (1b) des Befestigungselements (1) fortsetzt.

6. Dichtung nach Anspruch 5, dadurch gekennzeichnet, daß das Ende (3a) des ersten Abschnitts (31) des Deckelements (3) zum Anschluß an das U-förmige Befestigungselement (1) fest mit dem Schenkel (1a) verbunden ist, der dem sichtbaren Schenkel (1b) gegenüberliegt.

7. Dichtung nach einem der Ansprüche 4 bis 6, dadurch gekennzeichnet, daß das Dichtelement (2) fest mit dem Deckelement (3) verbunden ist.

8. Dichtung nach einem der Ansprüche 4 bis 7, dadurch gekennzeichnet, daß das freie Ende (3b) des Deckelements (3) einen umgebogenen Rand enthält, der dazu bestimmt ist, sich nach Aufsetzen dem Ende des sichtbaren Schenkels (1b) des Befestigungselements (1) anzupassen.

## Claims

1. Method of manufacturing a seal, comprising in particular the extrusion of a securing element (1) which is substantially U-shaped in cross-section and is provided with an internal reinforcement (10) with open-work zones and at least one sealing member (2), realised by co-extrusion with, from the visible side of the seal, a floating masking element (3), attached by one end (3a) to the securing element (1) and fixed flat on the securing element (1) so as to conceal on the visible faces the appearance defects created by the open-work zones of the internal reinforcement (10),
**characterised in that** longitudinal raised portions (11) forming connection crosspieces are realised by simultaneous extrusion on the visible face of the securing element intended to receive the masking element (3).

2. Method according to claim 1, **characterised in that** said masking element (3) is attached to the securing element (1) in a zone where the internal reinforcement (10) is not open-work.

3. Method according to one of the preceding claims, **characterised in that** the masking element (3) is secured to the securing element (1) by thermal bonding.

4. Seal comprising, on the one hand, a securing element (1) which is substantially U-shaped in cross-section and is provided with an internal reinforcement (10) with open-work zones, and, on the other hand, at least one sealing member (2), provided with a floating masking element (3), attached by one end (3a) to the securing element (1) and intended to be applied and fixed to the visible branch (1b) of the latter in order to conceal the appearance defects created by the open-work zones of the internal reinforcement (10),
**characterised in that** the branch (1b) of the U-shaped securing element (1) intended to receive the masking element (3) is provided with longitudinal raised portions (11) forming crosspieces to connect with said masking element (3).

5. Seal according to claim 4, **characterised in that** said masking element (3) is formed by a supple flange comprising a first section (31) for connecting to the U-shaped securing element (1), and being extended via a bend (3) by a second section (32) for covering the visible branch (1b) of the securing element (1).

6. Seal according to claim 5, **characterised in that** the end (3a), of the first section (31) of the masking element (3), for connecting to the U-shaped securing element (1) is immovably attached to the branch (1a) opposite the visible branch (1b).

7. Seal according to one of claims 4 to 6, **characterised in that** said sealing member (2) is immovably attached to the masking element (3).

8. Seal according to one of claims 4 to 7, **characterised in that** the free end (3b) of the masking element (3) comprises an angled edge to conform in shape to the end of the visible branch (1b) of the securing element (1) after being put in place.
